# EUROPEAN PATENT APPLICATION

(11) **EP 3 496 053 A1**
(43) Date of publication of application: **12.06.2019**
(21) Application number: 18208412.9
(22) Date of filing: 26.11.2018
(51) Int. Cl.: G07C 9/00, G05D 1/02

(54) **APPARATUS, SYSTEM, AND METHOD FOR SECURE ROBOT ACCESS**

(30) Priority: 05.12.2017 US 201715832550
(71) Applicant: Savioke Inc., Santa Jose, California 95113 (US)
(72) Inventor: HERGET, Philipp, Sunnyvale, CA California 94086 (US); COUSINS, Steve B., San Jose, CA California 95129 (US); LAU, Tessa, Sunnyvale, CA California 94086 (US)
(74) Representative: Grant, David Michael

(57) **Abstract**

A mobile robot includes features to improve security when the mobile robot traverses a secure door between a secure area and an unsecure area. This may include the mobile robot checking that a region about the secure door, in the unsecure area, is clear of an entity that is a tailgating risk, prior to opening the secure door.

## Description

### TECHNICAL FIELD

Embodiments in this disclosure are generally related to security issues associated with mobile robots. More particularly, an embodiment is directed to security issues associated with navigating a mobile robot through a secure door separating an unsecure area from a secure area.

### BACKGROUND

Mobile robots are finding increasing applications in a variety of industries. Some mobile robots are capable of navigating through buildings. As one example, a mobile robot may be used to make deliveries. However, this poses a potential security problem regarding the passage of mobile robots through a secure door separating a secure area from an unsecure area, which corresponds to a secure side of the secure door and an unsecure side of the secure door.

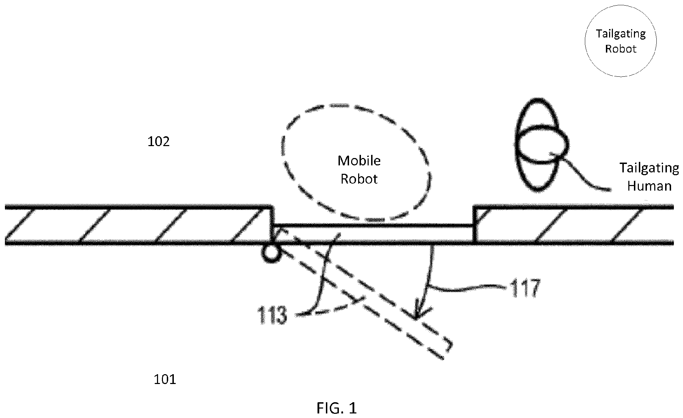

FIG. 1 illustrates a mobile robot positioned to open and traverse through a secure door 113. For example, the mobile robot could open the secure door 113 by submitting a signal or a code to an automatic door opener. When the door is opened to an open position 117, the mobile robot may traverse from an unsecure area 102 to a secure area 101. However, it is possible that an unauthorized human being could tailgate the robot. That is, the unauthorized human being could closely follow the mobile robot and attempt to enter through the secure door 113 as the mobile robot passes through the door. Additionally, it is also possible that another robot could tailgate the mobile robot.

Tailgating may pose a security risk if an unauthorized entity (human or robot) attempts to sneak into a secure area for malevolent reasons. However, even if tailgating is performed "innocently" (e.g., by an authorized person tailgating the robot to save the time and trouble of separately accessing the secure door) it may still create various security concerns, such as creating problems accurately tracking the number of people or robots entering and leaving a secure area.

Additionally, there is also a security concern when the robot leaves the secure area 101 and traverses through the secure door 113 back to the unsecure area 102. In this situation there is also a risk that a human being or a robot could sneak through the secure door 113 before the secure door 113 closes all the way.

### SUMMARY

A method, apparatus, and system for providing secure access of a mobile robot through a secure door is disclosed. In one embodiment, the mobile robot determines it requires access through a secure door separating a secure area from an unsecure area. The mobile robot performs at least one operation to control an opening of the secure door prior to navigating the mobile robot through the secure door. The opening of the secure door may be controlled to prevent an unauthorized entry by at least one unauthorized entity through the secure door.

In one embodiment, this includes the mobile robot performing at least one operation to ensure that a region in an unsecure area proximate a secure door is clear of at least one type of entity that is within a pre-selected range for an unauthorized entry through the secure door prior to the mobile robot opening of the secure door. In one embodiment, the mobile robot checks that a region of the unsecure area proximate the secure door is clear of an entity that is a security concern. In one embodiment, the mobile robot uses its own onboard sensors to check that the region is clear. In another embodiment, the mobile robot may use external sensors.

In some embodiments, the mobile robot determines that is requires access through a secure door and then waits for or summons an authorized entity to open the secure door.

In one embodiment, the mobile robot also monitors the secure door in a time period between when a decision is made to open the secure door and when it is closed. In some embodiments, the mobile robot may generate a report or an alarm if an unauthorized entity attempts to sneak through the secure door before it is fully closed.

In one embodiment, a security policy permits different policies to be selected to customize the operation that the mobile robot performs to prevent an unauthorized entry prior to the mobile robot navigating through the secure door.

### BRIEF DESCRIPTION OF THE DRAWINGS

Figure 1 is a top view illustrating the problem of a mobile robot being tailgated as the mobile robot traverses a secure door separating an unsecure area from a secure area.
Figure 2 is a perspective view illustrating an example of a mobile robot in accordance with an embodiment.
Figure 3 is a top view showing a secure door and an example of a set of features for the mobile robot to help prevent tailgating in accordance with an embodiment.
Figure 4A is a high-level block diagram of a controller to facilitate secure access of a mobile robot in accordance with an embodiment.
Figure 4B illustrates another example of the security policies unit of Figure 4A.
Figure 5 is a flowchart of a general method for providing secure access of a mobile robot in accordance with an embodiment.
Figure 6 is a flowchart of a method for a mobile robot to confirm that an unsecure area is clear prior to traversing from an unsecure area to a secure area in accordance with an embodiment.
Figure 7 is a flowchart of a method for a mobile robot to confirm that an unsecure area is clear prior to traversing from a secure area to an unsecure area in accordance with an embodiment.
Figure 8 is a flowchart of a method for a mobile robot to confirm that an unsecure area is clear prior to traversing from an unsecure area to a secure area and use an escort to return back to the unsecure area in accordance with an embodiment.
Figure 9 is a flowchart of a method of a mobile robot summoning an authorized entity to open a secure door in accordance with an embodiment.
Figure 10 is a flowchart of a method of a mobile robot waiting for an authorized entity to open a secure door in accordance with an embodiment.
Figure 11 is a flowchart of a general method of selecting security door access policies of a mobile robot.

### DETAILED DESCRIPTION

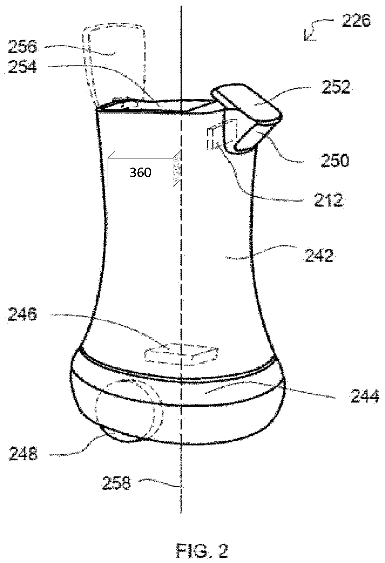

An embodiment of the present invention is directed to improving security of a mobile robot when the mobile robot needs to access a secure door separating a secure area from an unsecure area. An example of a mobile robot is illustrated in FIG. 2 to illustrate some general concepts of operation of a mobile robot operation and a control block 360 for improving the security of the access of a mobile robot 226 through a secure door. Referring to FIG. 2, a mobile robot 226 according to an embodiment is shown in a perspective view. A robot 226 can include a body 242, movement system 244, control system 246, and a first sense system 212. A body 242 can house all, or a majority of, the components of robot 226. In some embodiments, a body 242 can have a generally cylindrical shape about a vertical midline 258.

A movement system 244 (understood to be within body 242) can enable a robot 226 to travel to various destinations, including between floors of a multi-story building by riding within elevator cars. Elevators cars can be those cars used for people at the location, or can be other elevator cars, such as service elevator cars, or an elevator designed for robots or other machines. In the embodiment shown, a robot 226 can include a drive mechanism including two opposing wheels (one shown as 248), as well as a third smaller wheel (not shown) toward the rear of the robot 226. However, alternate embodiments can include any other suitable movement system, including those with fewer or greater numbers of wheels, or other movement systems, such as those that use tracks.

A control system 246 can control operations of a robot 226, including moving the robot 226 between desired locations in response to requests. A control system 246 can be located within a body 242. The control system may, for example, include maps and a localization system used, in combination with sensor data, to confirm a location of the robot and navigate the robot. While FIG. 2 shows control system 246 at a particular location within body 242, alternate embodiments can position a control system 246 at any suitable position in or on the robot 226.

In some embodiments, a robot 226 can include additional sensors for traveling within elevator cars between floors. For example, a robot 226 can include one or more door sensors for discerning an open/closed state of an elevator car door. Door sensors can be part of a first sense system 212, or can be components of another system. Door sensors can include, but are not limited to, optical or imaging techniques based on depth cameras, video cameras, still photos, or laser range finders. Alternatively, door sensors can include ultrasonic or radar ranging devices. Still further, door sensors can also include audio sensors, which can detect one or more distinctive sounds indicating an opening or closing of an elevator car door. Such distinctive sounds can include, but are not limited to, mechanical door sounds or sounds produced by the elevator systems, such as chimes to announce the arrival of an elevator car. In other embodiments, a robot 226 can sense a state of an elevator door by sensing door mounted beacons or tags, or changes in detected intensity of a signal emitted from inside the elevator car (e.g., infrared light intensity, RF signal, etc.). Door sensors can be used to notify a robot 226 when an elevator car has arrived at a floor, without the need for a reliable wireless connection with a system controller, or the like. Such additional sensors can form part of another sense system.

While FIG. 2 shows first sense system 212 at a particular location on robot 226, alternate embodiments can position a first sense system 212 at any suitable position in or on the robot 226.

Referring still to FIG. 2, a robot 226 can also include a navigation sensor system 250. A navigation sensor system 250 can include sensors to enable a robot to autonomously navigate a path between locations, and can include any suitable navigation sensors, including but not limited to video and/or still optical sensors (in visible and/or non-visible spectra), sonar sensors, radar sensors, or laser range finders. Such sensors can be used to provide a floor determination in addition to that provided by a first sense system 212, as noted above. As but one very particular example, a first sense system 212 can include a barometer for determining altitude, or an accelerometer for determining vertical motion, while a navigation sensor system 250 can task one or more of its image sensors to attempt to read floor indicators when inside of an elevator car and/or proximate an elevator car.

Optionally, a robot 226 can also include an interface (I/F) 252. An I/F 252 can enable a robot 226 to be directed or programmed to perform various tasks and/or to interact with other people. In a particular embodiment, an I/F 252 can include a touch screen I/F for a low profile. According to particular embodiments, a robot 226 can be a delivery robot and an I/F 226 can be used to authenticate delivery to an indicated destination and/or person.

A robot 226 can optionally include a securable container 254. A securable container 254 can be located within a body 242, and in some embodiments, can be positioned at the top, or proximate to the top of the robot 226. In a particular embodiment, a securable container 254 can include a securable lid 256 which can be locked and then released when an authentication procedure has been completed by the robot 226, or by the robot 226 in conjunction with a person.

The control system 246 can include one or more processors executing stored instructions that can be responsive to sensor inputs and/or transmitted inputs to navigate the robot between locations, including by riding elevator cars between different vertical locations. In a particular embodiment, a control system 246 can include an x86 or similar central processing unit. A control system 246 can also operate in conjunction with one or more microcontrollers and/or motor controllers for local control of robot 226.

In some embodiments, the navigation sensors of the robot can include any of: a video camera, a forward-looking depth sensor, or a downward looking depth sensor. A video camera can acquire imaging data for processing by the robot to recognize locations/landmarks to navigate a facility. In very particular embodiments, a video camera can be an RGB CMOS type video camera. In particular embodiments, each depth sensor can include a beam emitting device and an image sensor that detects the beam as it reflects off of objects. In a very particular embodiment, depth sensors can include an IR emitter and IR image sensor, such as an IR video camera.

In addition to navigation sensors, a robot 226 can include one or more other sensors, such as a wide-angle sonar device and a sonar array.

Power for the various systems of robot can be provided by batteries. A drive mechanism can include separate drive motors, each attached to its own wheel, in a differential drive configuration.

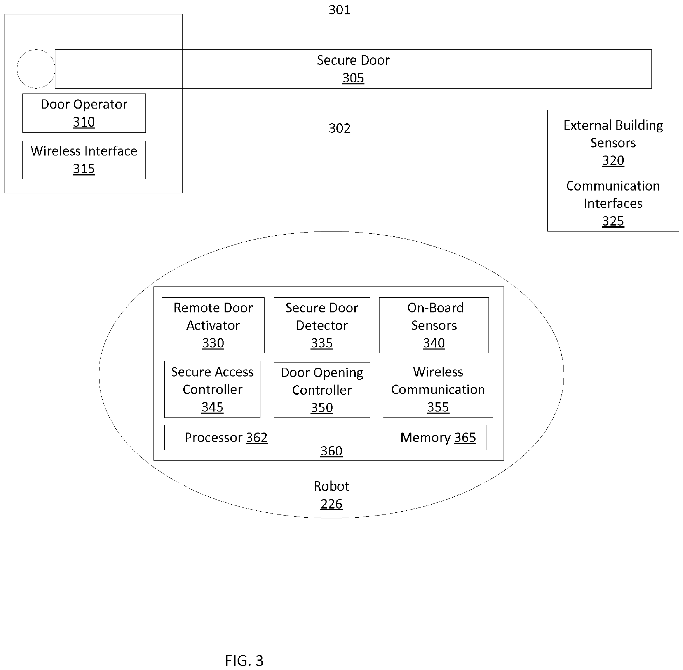

FIG. 3 illustrates an example of an embodiment of the control block 360 within the mobile robot 226 to provide secure access of the mobile robot through a secure door 305 separating a secure area 301 on a secure side of the secure door from an unsecure area 302 on an unsecure side of the secure door 305. For the purposes of illustration, elements of the control block 360 are illustrated as being in one location of the mobile robot 226 but more generally they may be distributed throughout the mobile robot 226 and interface with or include subsets of the previously described components.

In one embodiment, the mobile robot 226 includes a remote door activator 330 to activate a door operator 310 of a secure door 305 via a wireless interface 315. For example, the remote door activator 330 may generate a signal or code for the door operator 310 to open the secure door 305. However, it will be understood that alternate techniques to open the secure door 305 could be used, such as by modifying the mobile robot to include a robotic arm or a mechanical feature designed to open the secure door. While features are included in the mobile robot to open the secure door 305, it should be noted that the default state of a secure door is that a secure door is typically designed to automatically close after an entity (in this case the mobile robot) passes through the secure door. Thus, it would be understood that the secure door 305 closes behind the mobile robot after the mobile robot has traversed through the secure door 305. This may be implemented in various ways depending on implementation details, such as the mobile robot issuing a command to the door operator 310 to close the secure door 305, by the door operator 310 automatically closing the secure door behind the mobile robot (e.g., based on a time delay or by sensing the mobile robot has traversed through the secure door), by a mechanical bias or other design feature of the secure door that gradually closes the secure door after the mobile robot passes through the secure door, etc.

In one embodiment, a secure door detector 335 detects the presence of a secure door 305. For example, the secure door detector 335 may utilize a mapped location of a secure door, image recognition to detect the presence of a secure door and any distinctive features (e.g., card key reader), or detect a signal indicative of the presence of a secure door (e.g., a signal generated specifically to alert the mobile robot to the presence of a secure door). For example, the secure door detector may be implemented in software or firmware. In one embodiment, onboard sensors 340 are used to determine that an unsecure area is clear of entities that may attempt an unauthorized access through the secure door.

The onboard sensors 340 may comprise one or more sensors on the mobile robot. The onboard sensors 340 may include one or more of the previously described sensors of the mobile robot or be additional sensors of the mobile robot.

In one embodiment, the onboard sensors on the mobile robot are used to detect entities that may be a security concern in regards to potentially attempting an authorized access sneaking through the secure door. The onboard sensors may include, for example, acoustic sensors, motion sensors, infrared sensors, and video cameras, including any of the previously describes sensors. In some embodiments, one or more of the onboard sensors 340 may also be also used for other purposes by the mobile robot, such as for navigation and obstacle avoidance.

In one embodiment, the onboard sensors 340 and associated processors may be designed to detect doors opening and closing and people who may be in the secure area or the unsecure area. For example, human beings may be detected in a variety of different ways, such as by physical features/contours, thermal imaging, etc. Additionally, a protocol may be implemented to use sensor data to detect unauthorized entities (e.g., people or robots) who may be in the secure or unsecure areas. In some embodiments, this may include using the sensor data to perform person detection using one or more techniques to detect people. This may include, for example, detecting people via thermal detection, facial imaging scans, contour detection, motion detection and analysis, etc.

However, while a variety of techniques may be used to detect people or other robots, processing resources and power consumption are another consideration in operating a mobile robot. Physical sensor capabilities and cost may be another consideration in some cases. In some situations, comparatively simple approaches may be useful to perform at least an initial step to detect the presence of potentially unauthorized entities, such as people, other robots, etc. In one embodiment, the mobile robot may scan the area in the vicinity of the secure door using the onboard sensors 340. In one embodiment, to determine if the area is secure, the newly scanned data is compared to a stored map of the fixed objects in the building. Any new objects not already present on the map are treated as potentially unauthorized entities (e.g., unauthorized people or unauthorized robots). Additional considerations or rules, such as a proximity or range from the secure door could also be taken into consideration to detect unauthorized entities. Other variations of this basic approach are possible. For example, the detection of new objects not already present on the map could be used to generate an initial list of objects that are candidates to be unauthorized entities and then additional processing of sensor data could be performed to verify that the candidate unauthorized entities are to be treated as unauthorized entities.

In some applications, it may be possible to have access to external building sensors 320 located in the unsecure area as either an additional source of sensor data or as a primary source of sensor data for the mobile robot to detect unauthorized entities in a region of the unsecure area proximate the secure door. For example, external building sensors 320 may be accessed by the mobile robot 226 via wireless communication interface(s) 325. The external building sensors 320 may also include one or more sensors such as motion detectors, acoustic detectors, infrared detectors, a video camera, etc. In some embodiments, the external building sensors 320 augment the capabilities of the onboard sensors of the mobile robot in regards to detecting unauthorized entities attempting to sneak through the secure door. However, in some embodiments, the external building sensors 320 provide the primary information for the mobile robot to identify unauthorized entities that may be attempting to sneak through the secure door.

The external building sensors 320 may be existing sensors in a building. However, more generally, they may also be specifically added to a building to improve robot security. In some embodiments, the external building sensors 320 may also include a capability to analyze the sensor data from external building sensors 320, process the sensor data, and provide information to the mobile robot regarding the presence and location of unauthorized entities.

In some embodiments, the external building sensors 320 are the main source of data for the mobile robot 226 to detect tailgating when the mobile robot is in the secure area. When the external building sensors 320 are used it will be understood that they will also detect the mobile robot when the mobile robot is on the unsecure side of the secure door. For this situation, the data from the external sensors may be analyzed to distinguish the sensor data of the mobile robot from entities attempting to sneak through the secure door. For example, a thermal imaging scan of a robot is different than that of a human being. Additionally, a mobile robot typically has a different shape than a human being.

A wireless communication circuit 355 may be provided to enable the robot to communicate with wireless interface 315 or communication interfaces 325 over one or more wireless links. In some embodiments, the wireless communication circuit interface 355 can also be used to communicate with authorized entities, as described below in more detail.

In one embodiment, a door opening controller 350 controls when the secure door is open 305. In one embodiment, the door opening control 350 acts in response to control signals from a secure access controller 345. The secure access controller 345 is a controller that implements secure door access policies, as described below in more detail. A processor 362 and memory 365 may be provided to support the control block 360. In one embodiment, the secure access controller 345 may be implemented as a microcontroller having firmware or software with computer program instructions stored on a non-transitory storage medium to implement one or more methods to prevent an unauthorized access through the secure door.

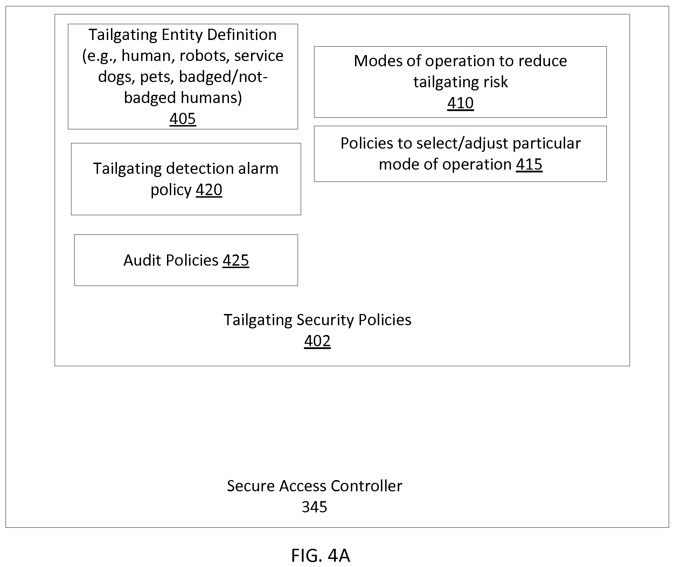

FIG. 4A is a block diagram illustrating selected aspects of a secure access controller 345 in accordance with an embodiment. A tailgating security policies unit 402 may include tailgating entity definition sub-unit 405. For example, the tailgating entity definition unit may be used to define each type of entity that is a potential security concern for an unauthorized access through a secure door. As examples, an entity that is potential security concern may include humans, robots, service dogs, and pets.

The definition may also be adjusted depending on whether the entity is badged or not badged. The definition of the entity, in turn, influences how sensor data is interpreted to identify a match. For example, a human being has a different thermal imaging profile than a robot. Service dogs and pets have different image pattern characteristics than a human. In some applications, a security badge worn by a human being can be recognized by its image or by an RF signal.

As another example, some companies permit employees to take pets with them to work. In such an environment in which there are pets in unsecure area, it may be useful in some cases to have an entity definition that prevents pets from tailgating the robot into secure areas where the presence of the pets might be disruptive.

Similarly, in some applications, tailgating by other robots is not a concern. However, it other applications preventing tailgating by other robots may be important.

A tailgating detection alarm policy sub-unit 420 may be provided in some embodiments to provide an additional layer of deterrence. This may include monitoring for unauthorized entry and (optionally) generating an alarm when it is detected. For example, there is slight time delay from when the mobile robot begins to traverse through the secure door 305 to the secure door closing. In theory, someone observing the robot from a distance could observe the robot beginning to traverse through the door and then rush to the door and attempt to sneak through before the door fully closes. To minimize the risks associated with this possibility, in one embodiment the mobile robot could direct its sensors to monitor the secure door from a time when the secure door is open until a time when the door is fully closed. This would create a record that could be used by security personal. Additionally, an alarm could be generated if an unauthorized entry is detected. This could include a silent alarm alerting security personal. However, it could also include an audible alarm to attempt to warn or scare off a person attempting to rush through the door.

In one embodiment, the mobile robot 226 adjusts its sensor operation, in the time period between when a decision is made to open the secure door and the secure door closing, to achieve an optimum view of any possible unauthorized entry. This include rotating the mobile robot. For example, when the mobile robot traverses through the secure door from the secure area to the unsecure area it could also rotate it sensors to look back at the secure door to monitor for an unauthorized entry as the secure door closes and issue a report or alarm if an unauthorized entry is detected.

In one embodiment, a remote human operator is provided with the alarm signal and the sensor data from the mobile robot to permit the remote human operator to make a threat categorization assessment whether or not to take additional action, such as triggering an audible alarm, alerting a security team, or summoning security.

An audit policies sub-unit 425 could include policies regarding what types of monitoring data are stored or reported when the mobile robot traverses a secure door. This could include, for example, the time, date, location and a selected portion of the sensor logs that might be relevant to determining if tailgating occurred. The audit policies 425 could also include a retention policy (e.g., how long to retain audit information in the robot) and a reporting policy (e.g., when and how to report audit information).

A sub-unit 410 supports different modes of operation to reduce the risk of an unauthorized entity sneaking through the secure door after the mobile robot traverses through the secure door. In one embodiment, a sub-unit 415 permits a policy for particular modes of operation to be selected or adjusted. In one embodiment, this is performed during some initial setup. For example, a mode of operation could be selected based on the availability of additional external sensor data, based on the availability of trusted people in the building to escort the mobile robot through a secure door, based on how severe the threat of an unauthorized entry is in a particular building, or based on other factors. For example, the cost of hardware, in the building, may be a factor. For example, in a large building it is possible that some portions of the building may have external sensors near secure doors while other portions of the building do not. Additionally, it is also possible that there may be variations in how secure doors open throughout a building that may also affect the selected mode of operation. For example, in a very large building not every secure door is necessarily the same or even fitted with the same type of remote door operator mechanism. Additionally, in a large building it is also possible that some secure doors may not include a door operator mechanism for cost or other considerations. The cost in terms of mobile robot hardware and processing power may, in some cases, be another consideration in terms of tradeoffs.

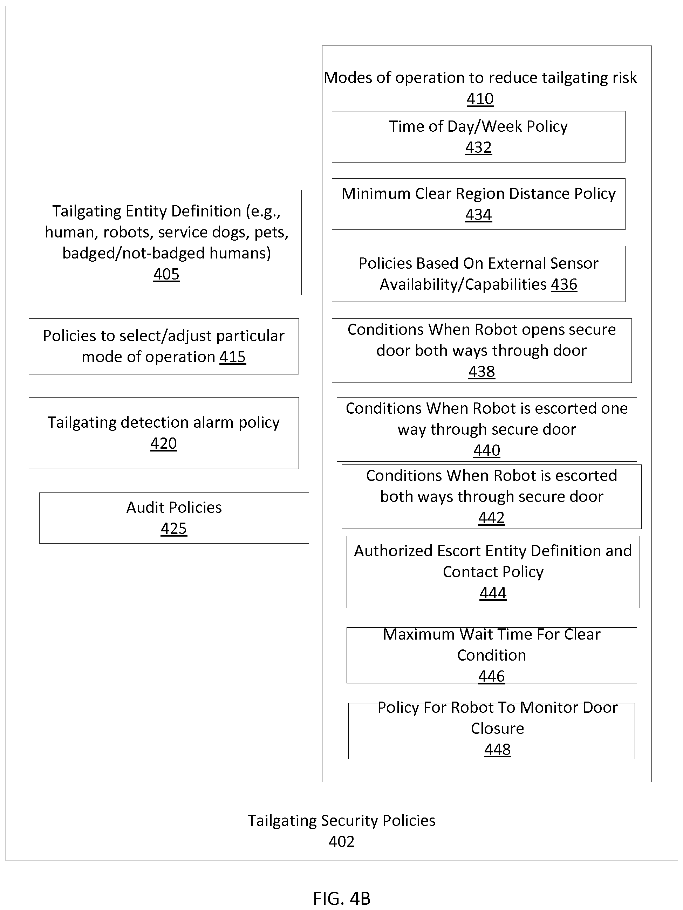

FIG. 4B illustrates in more detail examples of modes of operation 410. In one embodiment, the modes of operation 410 may be selected based on different criteria. For example, the security policy for the minimum clear region distance policy 434 may depend on the extent to which it is desired to prevent unauthorized entry.

Also, a minimum clear area may depend on the type of unauthorized entity that is a concern for an unauthorized access. For example, a different size of clear area may be required for a human being than for a dog or for another robot.

For example, the risk that an unauthorized entity will successfully tailgate the mobile robot from the unsecure area 302 to the secure area 301 depends in part on how close the unauthorized entity is to the secure door when the secure door is open. Generally, the closer an unauthorized entity is to the secure door the more of a tailgating risk they are.

For the return trip from the secure area 301 to the unsecure area 301, the risk of an unauthorized entry by an entity in the unsecure area 302 will also depend on how far the entity is away from the secure door. However, the risks may be less than for the first case of someone following the mobile robot as the mobile robot traverses from the unsecure side to the secure side of the secure door. For example, a person in the unsecure area may have more time to plan and execute an unauthorized entry when they follow the mobile robot from the unsecure area to the secure area than the reverse situation where the robot exits from the secure area to the unsecure area.

The risk of tailgating is reduced if the size of the minimum clear area in the unsecure area proximate the secure door is increased. For example, suppose the size of the minimum clear area in a first example corresponds to a region of about 1.0 meters about the secure door that is clear of unauthorized entities. This would provide some protection against tailgating. However, increasing the size of the region to 2.0 meters provides a lower risk of tailgating than if the radius of the clear region was 1.0 meters. However, there are practical limits on sensor accuracy versus distance. There are also, in high traffic areas, practical limits on how large the clear area can be and still be able to open the secure door without unduly waiting an excessive length of time for the region about the secure door to become clear. Also, in some cases a secure door is located in a hallway such that clear area is limited in at least one dimension by the hallway geometry.

Another way to consider the minimum clear area is in terms of pre-selected acceptable risk of an unauthorized entity successfully sneaking through the secure door. In some applications, it is sufficient that the risk is reduced to some pre-selected probability range such that there is a low risk of an unauthorized entry.

For example, an entity may be a risk of an unauthorized entry if it is within a certain range of the secure door. That is, a clear region could be defined in terms of a region in which an entity is not within a sufficient range of the secure door for an unauthorized entry within some pre-selected level of risk. For example, suppose the goal is to have a less than a 2% risk of successful tailgating. Then for this case, a corresponding pre-selected minimum range from the secure door can be selected. The selected minimum range can be based on various factors. For example, for human beings the clear region can be based on factors such as typical speeds people walk when attempting an unauthorized entry. Other factors may also come into play, such as whether or not the entity is facing or moving towards or away from the secure door, etc. Additionally, behavioral factors could be considered, such as whether or not an entity is moving in a manner characteristic of attempting to sneak through a secure door, such as following the mobile robot or otherwise changing a pattern of movement in an unusual manner, such as loitering near a secure door.

Also, other physical, psychological and behavioral factors may affect a range that is of concern. For example, for the case of hinged doors, the opening of the door is inherently asymmetric in the sense that a secure door commonly has a hinge on one side of the door and the other side of the door has a handle. Such a door closes in an arc. There may be more of a risk when a human being is near the side of the door having a door handle. That is, the desired clear region proximate the secure door does not have to be a symmetric semi-circle about the center of the secure door but may take into account other geometrical factors regarding how the door opens and closes, as well as other geometrical considerations and behavioral considerations, as this affects a range that an entity is a risk for an unauthorized entry. Additionally, consideration could be taken into account of any other obstructions near the secure door (e.g., water fountains). Moreover, as previously described, there may be differences in the risk of an unauthorized entry when the robot traverses from the unsecure side to the secure side compared with the reverse path from the secure side to the unsecure side.

However, it will also be understood that empirical studies could also be performed, such as adjusting up or down the size (and possibly the shape) of a clear region and determining how different selections of the minimum range affects the incidence of unauthorized entries and the tradeoffs of how long the mobile robot must wait during times of peak traffic.

Additionally, the size and shape of the region that is required to be clear may depend on the risk tolerance for an unauthorized access in a particular building. For example, some businesses can tolerate more risk than others. For example, the "back end" of many businesses have secure doors intended to provide only a minimal level of security, to provide a minimum level of, confidentiality, or to keep visitors away from back end operations. For example, some hotels have back end operations with secure doors that screen the hotel guests from the backend operations. That is in contrast to high security doors designed to protect stores of cash, valuables, or top-secret research.

Additionally, in some business environments, preventing an unauthorized access is just an additional layer of security protection that doesn't have to be perfect because it doesn't operate in isolation. For example, a secure area may also include security cameras, security monitors, etc. such that "perfect" control of people entering the secure door may not be required for the overall site security to be reasonably high in non-critical areas.

Another factor related to the modes of operation 410 is that a mobile robot will normally have more on-board sensor data available to make decisions when the mobile robot is in the unsecure area. Many types of secure door are opaque to at least several types of sensors used in mobile robots. For example, solid wood doors block most types of mobile sensors. Thus, a mobile robot stationed in a secure area behind a solid wood secure door is unlikely to be able to use its own sensors to detect humans lurking on the other side of the unsecure door. However, some security doors are made of high strength glass or plastic such that the optical cameras of a mobile robot could see through the door while at the same time other types of sensors could not sense objects behind the door. However, external building sensors 320 in the unsecure area is one possible solution, if available, to provide sensor data to the mobile robot.

Thus, in one embodiment, policies based on external sensor availability/capabilities 436 are particularly important when the robot is in the secure area and needs to move through the secure door to the unsecure area. If there are external sensors available in an unsecure area, this sensor data may increase the mobile robot's capability to detect entities that are a tailgating risk, particularly if the robot is in the secure area and needs to move through the secure door to the unsecure area. Moreover, even if the robot is in the unsecure area, the availability of external sensor data may be useful to augment the onboard sensors of the mobile robot.

In one embodiment, a time of day or the day of the week policy 432 may also be important considerations. For example, the risk of an unauthorized entry may be higher for certain times of the day or days of the week. Also, the time of the day or day of the week may be important in terms of the availability of staff to escort the robot. Additionally, the time of the day or the day of the week may determine the volume of foot traffic. For example, during a busy time of day a hallway may have so much foot traffic that there is rarely a time when there is a clear region around a secure door. Conversely, there may be other times of the day in which the same hallway could have long periods of time in which the hallway is clear about the secure door.

In one embodiment, the security policies may include conditions 438 when the robot opens the secure door both ways through. That is, in some cases having the mobile robot open the secure door when it travels back and forth from a secure area to an unsecure area is acceptable in terms of risk. However, in some cases there is a greater security risk when the robot opens the door for itself in traversing one direction or the other.

When there is such a disparity in risk, the security policy may have conditions 440 when the mobile robot has the secure door opened for it or is escorted (e.g., supervised) one way through the secure door. This may include conditions that authorize the mobile robot to open the secure door only for the lowest risk direction. In the other direction, the mobile robot is escorted (e.g., supervised) through the secure door by an authorized entity. That is, the secure door is opened for the robot under the watchful eye of an authorized entity that watches the secure door to prevent an unauthorized entity from slipping through the door.

As examples, the authorized entity may be a trusted human being such as a security guard, receptionist, etc. that opens the door (e.g., manually or electronically) and watches the secure door when the robot passes through (either in person or through a security camera) to ensure that the mobile robot 226 passes through the secure door without incident. However, it will also be understood that the authorized entity could, in principal, be a security robot or an automated security system performing the functions of opening the secure door for the mobile robot and watching to prevent unauthorized parties sneaking through the secure door.

In one embodiment, a security policy includes conditions 442 when the robot waits to be escorted both ways through the secure door. This is the lowest security risk option and also has the lowest hardware cost.

In one embodiment, a security policy 444 allows a definition to be defined of an authorized entity for escorting the mobile robot through the secure door. This could, for example, include a security guard, receptionist, staff member, or remote support team. The definition could also include contact information for the authorized entity (to summon them).

In one embodiment, a security policy may also include a maximum wait time for a clear condition policy 446. For example, during times of day when there is heavy foot traffic in a hallway, a mobile robot could be forced to wait a long time for a region about a secure door to be clear. A maximum wait time could be selected before the robot proceeds to a default mode, such as contacting an authorized entity to open the secure door.

In one embodiment, a security policy may also include a policy for the mobile robot to monitor the door closure 448. For example, the path the robot takes may be adjusted to provide optimal monitoring, by the mobile robot's sensors, of the secure door. However, this may come at the expense of the fastest traversal speed of the robot to its destination. For example, after the robot traverses the secure door it could stop a selected distance outside the secure door, wait for the secure door to fully close, and also position itself to make the best available use of its sensors to detect any entities attempting to sneak through the secure door while it is closing. Additionally, the action of stopping and waiting may also, in some cases, discourage a human being attempting an unauthorized entry.

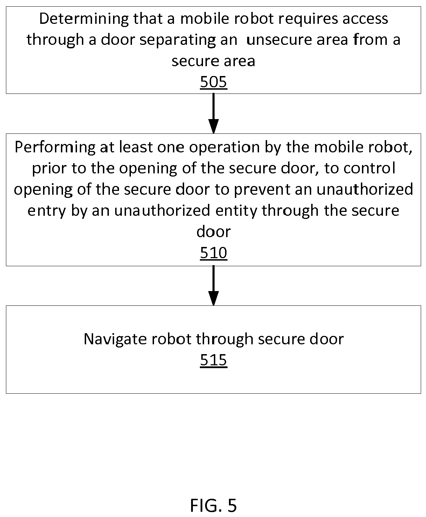

FIG. 5 is a flowchart of a general method of providing a secure access of a mobile robot in accordance with an embodiment. In block 505, a determination is made that the robot requires access through a secure door separating an unsecure area from a secure area. As described above, in one embodiment, the secure door detector 335 may use mapping data, image recognition, or other techniques to detect the presence of a secure door and whether the mobile robot is on the secure or unsecure side of the secure door.

In block 510, the mobile robot performs at least one operation to prevent an unauthorized entry by an unauthorized entity through the secure door prior to the opening of the secure door and the traversal of the mobile robot through the secure door. In some embodiments, this includes at least one operation that directly or indirectly controls the opening (and closing) of the secure door to make it more difficult for unauthorized entities in the unsecure area to sneak through the secure door. Of course, it should be noted that secure doors are generally designed to automatically close. For example, a secure door may include a mechanical bias or electronic mechanism that biases the secure door to automatically close gradually after a person or entity passes through the secure door. Thus, one option would be for the secure door to have a bias that automatically closes the secure door after the mobile robot traverses through the secure door. Alternatively, the door operator 310 could be programmed or commanded by the mobile robot to close the secure door after the mobile robot has traversed through it. For example, the door operator 310 could apply a force via a motor or actuator to open the secure door and then release the force, after the mobile robot has traversed through the secure door, to permit the secure door to close.

In one embodiment, the mobile robot summons or waits for an authorized entity to escort the mobile robot through the secure door, where the actions of the authorized entity ensure that the unsecure area is clear. For example, the authorized entity may open the secure door and the mobile robot proceeds under the supervision of the authorized entity, after which the secure door closes behind the mobile robot. For example, the authorized entity may keep a lookout for a human being, robot, pet, or other entity that may attempt to sneak through the secure door. Depending on implementation, the authorized entity may also close the door behind the mobile robot, the door may automatically close behind the mobile robot, or the mobile robot may issue a signal when it has traversed through the secure door to close the secure door.

As described below, in some embodiments the mobile robot checks that the unsecure area is clear before the mobile robot opens the door. This may be in a selected region in the unsecure area proximate the secure door. The size and shape of the selected region that must be clear may be selected to reduce a risk of an unauthorized entry by an unauthorized entity.

Additionally, in some embodiments, the mobile robot generates an alarm or warning if an unauthorized entity attempts to sneak through the secure door as an additional security measure.

In block 515, the mobile robot navigates through the secure door. This may include the mobile robot detecting that the secure door is open prior to navigating and traversing through the secure door. That is the mobile robot may confirm that the secure door is open prior to engaging the drive mechanism of the mobile robot. After the mobile robot has traversed through the secure door the secure door closes behind the mobile robot, which depending on implementation details may be implemented in various ways, depending on how the secure door is designed to close and the operation of the door operator.

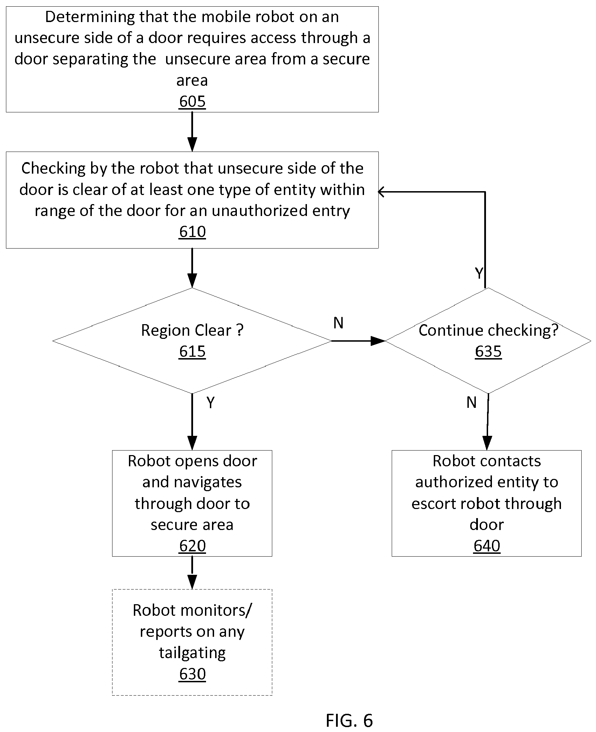

FIG. 6 is a flowchart illustrating a method for a mobile robot preventing tailgating as the mobile robot traverses from an unsecure side of a secure door to a secure side. In block 605, the mobile robot determines that it is located in an unsecure area on an unsecure side of secure door and that it requires access through the secure door to secure area. As previously discussed, this determination may be based on the robot's internal maps and localization data. Additional information identifying that the door is a secure door could also be obtained from image recognition or other means.

In block 610, the mobile robot checks that a region in the unsecure area proximate the secure door is clear of at least one type of entity within range of the door for an unauthorized entry. In some embodiments, the checking is performed in a region that encompasses an area in which tailgating is a concern, which may in turn correspond to a pre-selected level of risk of an unauthorized entry.

In decision block 615, a determination is made whether the region on the unsecure side of the door is clear. If it is clear, the mobile robot opens the secure door and traverses through to the secure area, as shown in block 620. In some embodiments, the mobile robot may optionally monitor and report on any tailgating that occurs in the time period between when a decision is made to open the secure door and the closing of the secure door, as indicated by block 630. For example, even if a clear condition is detected, a human being could attempt to "sprint" through the door as it is closing. The monitoring and reporting may also optionally include generating a silent or audible alarm.

Returning back to decision block 615, in some situations the region in the unsecure area about the secure door will not be clear. This situation may, in some cases, persist for a while. If the region is not clear, in one embodiment block 635 makes a decision whether or not to continue checking. For example, a time limit could be imposed for how long to continue checking before the mobile robot contacts an authorized entity to escort the robot through the door as indicated by block 640. That is, the authorized entity is contacted and opens the secure door for the mobile robot and watches to prevent an unauthorized access by an unauthorized entity. In theory, of course, the mobile robot could wait as long as it takes until the region is clear. However, having a mobile robot waiting for an extended period of time for a region to be clear reduces the mobile robot's capability to perform other tasks. Thus, in some embodiments at least one policy is provided to address the situation in which it takes a substantial period of time for the unsecure region to become clear.

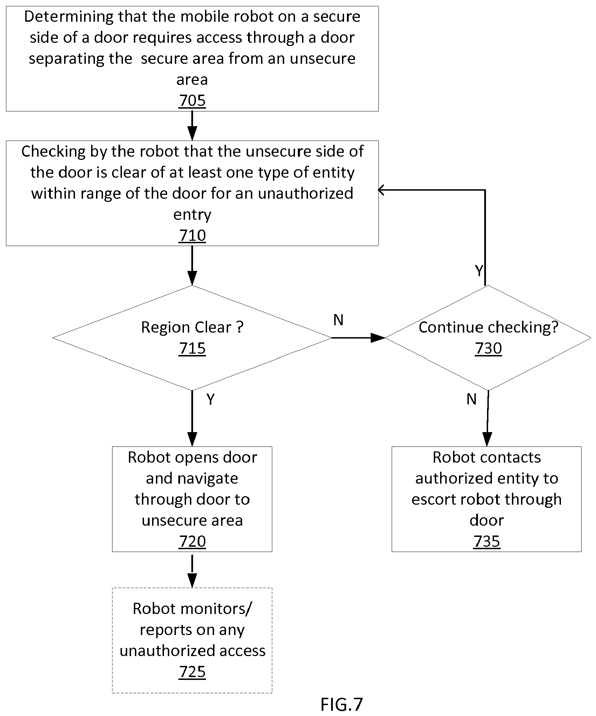

FIG. 7 is a flowchart of a method for a mobile robot to prevent unauthorized entry when the mobile robot traverses from a secure side of the secure door to an unsecure side of the door. Some aspects of this mode of operation depend on the characteristics of the secure door, the capabilities of the onboard sensors of the mobile robot, and the mobile robot's ability to access external sensors. In many cases, a mobile robot that is within the secure area will have limited or no capabilities, while the secure door is closed, to detect entities that are in the unsecure area behind the secure door. For example, some secure doors are fabricated from security glass such that the secure door is transparent. In such a situation, the video cameras of the mobile robot, which detect visible light, can look through from the secure side of the door to the unsecure side. However, glass blocks infrared radiation. Many types of motion detectors are also unable to detect objects on the other side of a glass door. Moreover, some security doors, such as solid wood doors, would likely block most of the common sensors used by a robot. However, some types of doppler radar are supposed to be capable of penetrating wood (but not metal) materials.

However, in some cases, such as a glass security door, the mobile robot may be in the secure area but still be able to use its onboard sensors to detect entities on the other side of the door. In other cases, the mobile robot may be in the secure area but have access to external building sensors 320 within the unsecure region to obtain data to detect entities in the unsecure region.

In block 705, the mobile robot determines that it is on a secure side of a door and requires access through the secure door to an unsecure area. As previously described, the mobile robot may use an internal map and localization system to determine its location against the internal map and identify its location. Additionally, in some cases, the mobile robot may use other techniques, such as image recognition, as an aid in determining that it is in a secure area proximate a secure door leading to an unsecure area.

In block 710, the mobile robot checks on the unsecure side of the door, whether a region on the unsecured side of the door proximate the secure door is clear of at least one type of entity within range of the secure door for an unauthorized entry. In some cases, such as a secure door made of glass, the mobile robot may be able to use its own sensor data to determine if the region is clear. In other cases, it may require data from external sensors in the unsecure region. The checking may be performed within a pre-selected distance on the unsecure side of the door.

In decision block 715, a decision is made whether or not the region is clear. If it is clear, then in block 720 the mobile robot opens the secure door and traverses through to the unsecure area. As indicated by block 725, in some embodiments the mobile robot may also monitor and report on any unauthorized access and/or generate a silent or audible alarm in the even that an unauthorized entity attempts to sneak through the secure door in the time period between when the decision is made to open the secure door and the closing of the secure door.

In the event that decision block 715 determines that the region is not clear, then decision block 730 can make a determination whether or not to continue checking. For example, checking could be continued for up to some maximum time period. If a decision is made to not continue checking, then as illustrated by block 735 in one embodiment the robot may contact an authorized entity to escort the robot through the secure door.

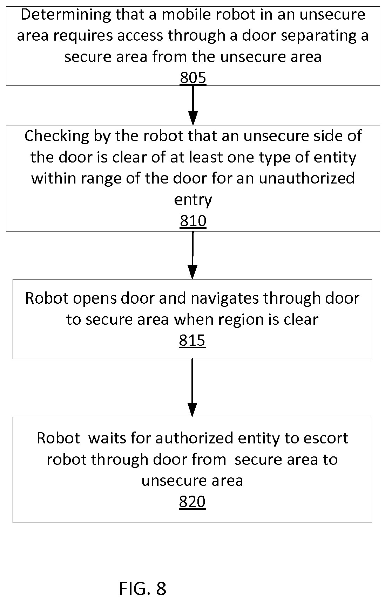

FIG. 8 is a flowchart illustrating a method in which the mobile robot opens the door from the unsecure area to the secure area but relies on an escort to traverse from the secure area to the unsecure area.

In block 805, the mobile determines that it is in an unsecure area and requires access through a secure door separating a secure area from an unsecure area. In block 810, the mobile robot checks that the region on the unsecure side of the door is clear for at least one type of entity within range of the door for an unauthorized entry. In block 815, the mobile robot opens the secure door and traverses through the secure door to the secure area when the region is clear. However, when traveling the other direction, the mobile robot waits for an authorized entity to escort the mobile robot from the secure area to the unsecure area. For example, the mobile robot may wait for the door to be opened by a staff member who is there in person or monitoring the secure area remotely. However, in some embodiments the mobile robot may also actively signal or summon an authorized entity (e.g., a staff member) to open the secure door, such as by flashing a light or transmitting a wireless signal.

One aspect of the embodiment of Figure 8 is that it may be used in situations in which there are no external sensors in the unsecure area and the secure door is composed of a material that the mobile robot's sensors cannot penetrate.

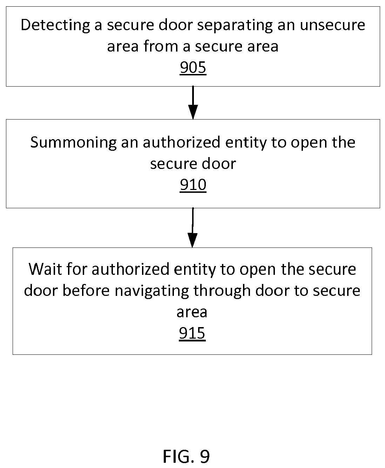

FIG. 9 is a flowchart of a method of preventing tailgating by summoning an authorized entity to open a secure door. In block 905, the mobile robot detects a door separating an unsecure area from a secure area. In one embodiment, this decision is made via a door detector on the robot. However, more generally, the door detector could be an external unit that the mobile robot communicates with, such as a door detector near the secure door. In block 910, the mobile robot summons an authorized entity to open the secure door. For example, the authorized entity may be a security guard, a receptionist, or other individual. For example, the mobile robot could summon the authorized entity using a wireless signal, such as a text message sent via a local wireless signal to a mobile device of the authorized entity. In block 915 the mobile robot waits for the authorized entity to open the door before proceeding through the door to the secure area. For example, the mobile robot may use its sensors to detect that the door has opened and then proceed through the door. A similar reverse procedure could be used for the mobile robot to traverse the other way from the secure area to the unsecure area.

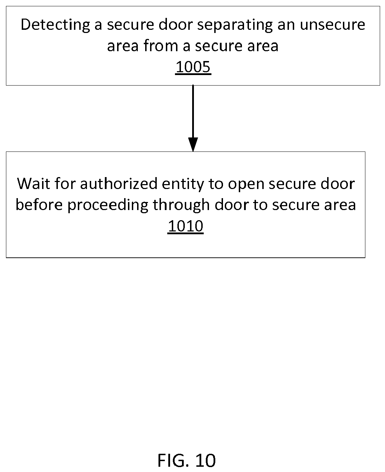

FIG. 10 is a flowchart showing a variation of the method of Figure 9. In block 1005, the mobile robot detects a door separating an unsecure area from a secure area. In block 1010, the mobile robot waits for an authorized entity to open the door before proceeding through the door to the secure area. For example, the mobile robot may use its sensors to detect that the door has opened and then proceed through the door. As one example, staff may be trained to open the door for the mobile robot when they spot it waiting. A similar procedure may be used when the robot needs to traverse from the secure area to the unsecure area.

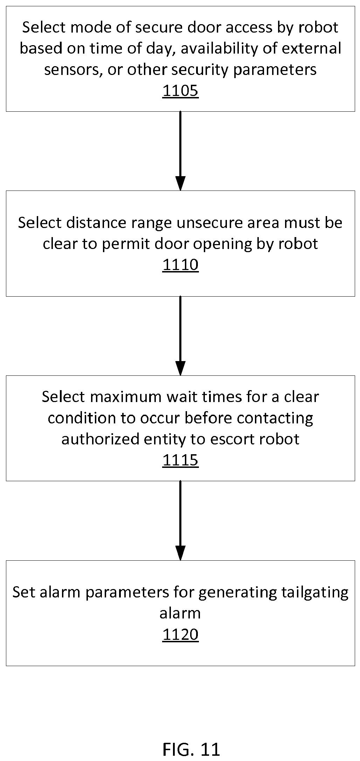

FIG. 11 is a flowchart illustrating a general method of selecting security policies for the mobile robot. In one embodiment, a user interface permits aspects of the robot's operation to be configured at some initial setup time or reconfigured. In block 1105, a mode of the secure door access is selected from available options. The selection may be based on factors such as time of day, day of the week, availability of external sensors, or other security parameters. In block 1110 a selection is made of parameters related to selection of a distance range the unsecure region must be clear to permit the robot to open the door. In block 1115, a selection is made of a maximum wait time for clear condition to occur before contacting an authorized entity to open the door and escort the robot. In block 1120, alarm parameters are selected for generating a tailgating alarm. More generally it would be understood that other parameters related to adjusting the operation of the mobile robot to prevent unauthorized access may be selected or adjusted.

While the embodiments above disclose various systems, devices and methods, additional methods will now be described with reference to a number of flow diagrams. Reference in the specification to "one embodiment", "some embodiments" or "an embodiment" means that a particular feature, structure, or characteristic described in connection with the embodiment is included in at least some embodiments of the disclosed technologies. The appearances of the phrase "in some embodiments" in various places in the specification are not necessarily all referring to the same embodiment.

Some portions of the detailed descriptions above were presented in terms of processes and symbolic representations of operations on data bits within a computer memory. A process can generally be considered a self-consistent sequence of steps leading to a result. The steps may involve physical manipulations of physical quantities. These quantities take the form of electrical or magnetic signals capable of being stored, transferred, combined, compared, and otherwise manipulated. These signals may be referred to as being in the form of bits, values, elements, symbols, characters, terms, numbers, or the like.

These and similar terms can be associated with the appropriate physical quantities and can be considered labels applied to these quantities. Unless specifically stated otherwise as apparent from the prior discussion, it is appreciated that throughout the description, discussions utilizing terms for example "processing" or "computing" or "calculating" or "determining" or "displaying" or the like, may refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

The disclosed technologies may also relate to an apparatus for performing the operations herein. This apparatus may be specially constructed for the required purposes, or it may include a general-purpose computer selectively activated or reconfigured by a computer program stored in the computer.

The disclosed technologies can take the form of an entirely hardware implementation, an entirely software implementation or an implementation containing both software and hardware elements. In some implementations, the technology is implemented in software, which includes but is not limited to firmware, resident software, microcode, etc.

Furthermore, the disclosed technologies can take the form of a computer program product accessible from a non-transitory computer-usable or computer-readable medium providing program code for use by or in connection with a computer or any instruction execution system. For the purposes of this description, a computer-usable or computer-readable medium can be any apparatus that can contain, store, communicate, propagate, or transport the program for use by or in connection with the instruction execution system, apparatus, or device.

A computing system or data processing system suitable for storing and/or executing program code will include at least one processor (e.g., a hardware processor) coupled directly or indirectly to memory elements through a system bus. The memory elements can include local memory employed during actual execution of the program code, bulk storage, and cache memories which provide temporary storage of at least some program code in order to reduce the number of times code must be retrieved from bulk storage during execution.

Input/output or I/O devices (including but not limited to keyboards, displays, pointing devices, etc.) can be coupled to the system either directly or through intervening I/O controllers.

Network adapters may also be coupled to the system to enable the data processing system to become coupled to other data processing systems or remote printers or storage devices through intervening private or public networks. Modems, cable modems and Ethernet cards are just a few of the currently available types of network adapters.

Finally, the processes and displays presented herein may not be inherently related to any particular computer or other apparatus. Various general-purpose systems may be used with programs in accordance with the teachings herein, or it may prove convenient to construct a more specialized apparatus to perform the required method steps. The required structure for a variety of these systems will appear from the description below. In addition, the disclosed technologies were not described with reference to any particular programming language. It will be appreciated that a variety of programming languages may be used to implement the teachings of the technologies as described herein.

The foregoing description of the implementations of the present techniques and technologies has been presented for the purposes of illustration and description. It is not intended to be exhaustive or to limit the present techniques and technologies to the precise form disclosed. Many modifications and variations are possible in light of the above teaching. It is intended that the scope of the present techniques and technologies be limited not by this detailed description. The present techniques and technologies may be implemented in other specific forms without departing from the spirit or essential characteristics thereof. Likewise, the particular naming and division of the modules, routines, features, attributes, methodologies and other aspects are not mandatory or significant, and the mechanisms that implement the present techniques and technologies or its features may have different names, divisions and/or formats. Furthermore, the modules, routines, features, attributes, methodologies and other aspects of the present technology can be implemented as software, hardware, firmware or any combination of the three. Also, wherever a component, an example of which is a module, is implemented as software, the component can be implemented as a standalone program, as part of a larger program, as a plurality of separate programs, as a statically or dynamically linked library, as a kernel loadable module, as a device driver, and/or in every and any other way known now or in the future in computer programming. Additionally, the present techniques and technologies are in no way limited to implementation in any specific programming language, or for any specific operating system or environment. Accordingly, the disclosure of the present techniques and technologies is intended to be illustrative, but not limiting.

## Claims

1. A method of preventing tailgating of a mobile robot, comprising:
determining, by the mobile robot, that the mobile robot requires access through a secure door separating a secure area from an unsecure area; and
performing, prior to navigating the mobile robot through the secure door, at least one operation by the mobile robot to control opening of the secure door to prevent an unauthorized entry of at least one type of unauthorized entity through the secure door.

2. The method of claim 1, wherein the mobile robot opens the secure door and the performing at least one operation comprises checking, by the mobile robot, that a region in the unsecure area proximate the secure door within a range for an unauthorized entry is clear of the at least one type of unauthorized entity prior to the mobile robot opening the secure door; or
wherein the performing at least one operation comprises the mobile robot summoning or waiting for an authorized entity to open the secure door.

3. The method of claim 1, wherein the performing at least one operation comprises determining by the mobile robot that it is on the unsecure side of the secure door, checking by the mobile robot whether a region of the unsecure area proximate the secure door is clear of the at least one type of unauthorized entity within a range for an unauthorized access, and opening by the mobile robot the secure door in response to determining the region of the unsecure area is clear.

4. The method of claim 3, further comprising the mobile robot contacting an authorized entity to open the secure door in response to determining that the region in the unsecure area is not clear of the at least one type of unauthorized entity.

5. The method of claim 1, the performing at least one operation comprises determining by the mobile robot that it is on the secure side of the secure door, checking by the mobile robot whether a region of the unsecure area proximate the secure door is clear of the at least one type of unauthorized entity within a range for an unauthorized access, and opening by the mobile robot the secure door in response to determining the region of the unsecure area is clear.

6. The method of claim 5, wherein the mobile robot accesses sensor data of external sensors in the unsecure area.

7. The method of claim 1, further comprising the performing at least one operation comprises determining by the mobile robot that it is in the secure area on the secure side of the secure door and waiting for or summoning an authorized entity to open the secure door; or
further comprising the mobile robot detecting and reporting an unauthorized entity attempting to enter through the secure door in a time period between when the secure door begins to open but before the secure door has closed.

8. The method of claim 1, wherein the at least one operation is selected by a security policy to include one member from the group of 1) checking that a region in the unsecure area is clear of the at least one type of entity prior to opening the secure door, 2) waiting for an authorized entity to open the secure door, and 3) summoning an authorized entity to open the secure door.

9. A mobile robot, comprising:
a drive mechanism;
a navigation system; and
a controller configured to perform at least one operation, prior to navigating the mobile robot through a secure door separating an unsecure area from a secure area, to control opening of the secure door to prevent an unauthorized entry of at least one type of unauthorized entity through the secure door.

10. The mobile robot of claim 9, wherein the controller includes a mode of operation to utilize at least one sensor of the mobile robot to check that a region of the unsecure area within a range for an unauthorized access is clear of the at least one type of unauthorized entity prior to opening the secure door; or
wherein the controller includes a mode of operation to access data from at least one external sensor to check that the unsecure area is clear of the at least one type of unauthorized entity prior to opening the secure door.

11. The mobile robot of claim 9, wherein the controller includes a mode of operation to summon or wait for an authorized entity to open the secure door for the mobile robot; or
wherein the controller has a mode of operation to determine that the mobile robot that it is in the unsecure area, check that a region of the unsecure area is clear of the at least one type of unauthorized entity using sensor data of the mobile robot, and open the secure door in response to determining the region is clear.

12. The mobile robot of claim 9, wherein the controller has a mode of operation to contact an authorized entity to open the secure door in response to the mobile robot determining that a region in the unsecure area is not clear of the at least one type of entity; or
wherein the controller has a mode of operation in which it determines that the mobile robot is in the unsecure area, checks whether the region of the unsecure area is clear of the at least one type of unauthorized entity using external sensor data, and opens the secure door in response to determining the region is clear.

13. The mobile robot of claim 9, wherein the controller selects the operation that is performed based on a security policy to include a member from the group consisting of: 1) checking that a region in the unsecure area is clear of the at least one type of unauthorized entity prior to opening the secure door, 2) waiting for an authorized entity to open the secure door or escort the mobile robot through the secure door, and 3) summoning an authorized entity to open the secure door or escort the mobile robot through the secure door.

14. The mobile robot of claim 9, wherein the controller is configured to monitor and report on attempts at unauthorized access by the unauthorized entity.

15. A mobile robot, comprising:
a drive mechanism;
an autonomous navigation system;
at least one sensor;
a secure door activator to remotely open a secure door via a wireless communication interface;
a secure door detector to detect secure doors separating an unsecure area from a secure area; and
a controller configured to perform at least one operation, prior to navigating the mobile robot through the secure door, to control opening of the secure door to prevent an unauthorized entry of at least one type of unauthorized entity through the secure door.
